## Europäisches Patentamt

## European Patent Office

## Office européen des brevets

(11) Veröffentlichungsnummer: **0 241 679**
**A2**

# EUROPÄISCHE PATENTANMELDUNG

(21) Anmeldenummer: **87102630.8**

(22) Anmeldetag: **24.02.87**

(51) Int. Cl.⁴: **G 05 B 19/405**

(30) Priorität: **14.03.86 DE 3608572**

(43) Veröffentlichungstag der Anmeldung: **21.10.87**
**Patentblatt 87/43**

(84) Benannte Vertragsstaaten: **AT BE CH FR GB IT LI LU NL SE**

(71) Anmelder: **Fried. Krupp Gesellschaft mit beschränkter Haftung, Altendorfer Strasse 103, D-4300 Essen 1 (DE)**

(72) Erfinder: **Schneider, Hans-Peter, Kohlenstrasse 78, D-4300 Essen 17 (DE)**
Erfinder: **Perez, Juan Luis, Bredeneyer Strasse 28, D-4300 Essen 1 (DE)**

(54) **Verfahren und Vorrichtung zur berührungslosen Bruch- und Verschleissüberwachung von Werkzeugen.**

(57) Zwecks sicherer und frühzeitiger Brucherkennung und Verschleißüberwachung wird vorgeschlagen, die relative Lage (in einer statischen Messung) und/oder die relative Lageänderung (in einer dynamischen Messung) zweier benachbarter Werkzeugteile, von denen mindestens eines durch die Werkzeugoperation beansprucht ist, ständig magnetisch zu messen und zu überwachen. Als Meßwertaufnehmer dienen eine Induktionsspule (3) und/oder eine Hallsonde (4).

FRIED. KRUPP GESELLSCHAFT MIT BESCHRÄNKTER HAFTUNG
in Essen


Verfahren und Vorrichtung zur berührungslosen
Bruch- und Verschleißüberwachung von Werkzeugen


Die Anmeldung betrifft ein Verfahren und eine Vorrichtung zur berührungslosen Bruch- und Verschleißüberwachung von Werkzeugen, insbesondere von solchen, die automatisch in Werkzeugmaschinen gewechselt werden können. Bei zunehmender Automatisierung numerisch gesteuerter Maschinen wird mehr und mehr eine vom Bedienungspersonal unabhängige selbsttätige Überwachung der Werkzeuge gefordert. So sind indirekte Meßmethoden mechanisch, induktiv, kapazitiv oder optisch abtastender Systeme bekannt, die nach jeder Bearbeitungsoperation das Werkzeug auf seinen einwandfreien Zustand hin untersuchen. Diese Systeme haben jedoch den Nachteil, daß sie einen plötzlich auftretenden Werkzeugtotalbruch nicht rechtzeitig erkennen können und somit vielfach der durch einen Werkzeugbruch verursachte Folgeschaden nicht abgewendet werden kann.

Zur Früherkennung von Totalbrüchen bei Schneidkeramiken ist ein System entwickelt worden, bei dem Risse in der Schneidkeramik bereits zur Zerstörung der auf der Nebenfreifläche aufgedampften dünnen Leiterbahn führen. Nachteilig ist jedoch der hohe Aufwand zum Aufdampfen von Leiterbahnen an jeder Nebenfreifläche und das Anbringen von Kontaktpunk-

- 2 -

ten am Werkzeughalter. Weiterhin ist das Meßverfahren wegen der notwendigen isolierenden Eigenschaften des Schneidstoffes auf Schneidkeramik begrenzt und ermöglicht keine Erkennung von Mikroausbrüchen an einer Hauptschneide eines Werkzeuges.

Aus der VDI-Z 116 (1974) Nr. 17, Seite 1427 ff. ist ferner ein faseroptisches Meßverfahren bekannt, bei dem der mit fünf Bändern aus etwa 25 µm dicken Glasfasern bestückte Abtastkopf in einer Parallelschwinge aufgenommen ist und zur Messung des Verschleißes durch den rotierenden Exzenter an der Freifläche eines Drehwerkzeuges vorbeigeführt ist. Aufgrund des unterschiedlichen Reflektionsverhaltens von verschlissener und unverschlissener Freifläche ergibt sich ein Lichtsignal mit einer Fotospannung, dessen Flankenbreite von der vorliegenden Verschleißmarkenbreite abhängig ist.

Aber auch dieses Meßverfahren arbeitet sehr ungenau und kann bei plötzlich auftretenden Brüchen nicht schnell genug die Maschine zum Stillstand bringen.

Es sind daher ein Verfahren und eine Vorrichtung anzugeben, die zuverlässig die im Werkzeug, Werkzeugträger bzw. Werkzeuggrundhalter, die beim Werkzeugeinsatz,z.B. einer Zerspanung, auftretenden Kräfte in verwertbare Signale umsetzt. Dabei soll das geforderte Verfahren bzw. die gewünschte Vorrichtung möglichst einfach aber zuverlässig im Hinblick auf eine frühzeitige Erkennung eines drohenden Werkzeugbruches sowie einer Verschleißüberwachung arbeiten.

Die Aufgabe wird durch ein Verfahren gelöst, bei dem die Lage und/oder die Lage-(Orts-)änderung zweier benachbarter Teile, von denen mindestens eines durch die Werkzeugoperation mit Kräften beaufschlagt wird, ständig induktiv gemessen und überwacht wird. Solche Teile sind z.B. das Werkzeug, der Werkzeugträger und/oder der Werkzeuggrundhalter, ggf. auch die Revolverscheibe, in die der Werkzeuggrundhalter eingesetzt ist. Bei Änderung bzw. bei Überschreiten eines vorgebbaren Grenzwertes wird ein Signal abgegeben. Es kann somit entweder statisch oder dynamisch induktiv gemessen werden.

Die Erfindung beruht auf folgender Erkenntnis. Bei der Bearbeitung eines Werkstückes verformen sich sowohl das Werkzeug als auch der Werkzeugträger und der Werkzeuggrundhalter, bei hinreichender Kraftübertragung auf das Werkzeug ggf. sogar die Revolverscheibe, in der der Werkzeuggrundhalter befestigt ist. Ist nun eines oder sind mehrere der genannten Bestandteile gleichzeitig Träger eines schwachen Magneten 2, der ein inhomogenes Magnetfeld besitzt, und bringt man eine Meßvorrichtung für die magnetische Feldstärke ortsfest und schwingungsfrei gelagert in die Nähe des genannten Magneten, so bewirken Ortsänderungen jedes Magneten, der die Bewegungen des Trägers mitmacht, eine Änderung des gemessenen inhomogenen magnetischen Feldes. Mit anderen Worten, bei einer Relativbewegung bzw. Abstandsänderung zwischen dem Magneten und der ortsfesten Meßeinrichtung wird die magnetische Flußdichte um so größer, je näher die Oberfläche des Magneten kommt und um so kleiner, je weiter der Magnet entfernt ist.

Nach einer Weiterbildung der Erfindung kann jedoch das Magnetfeld auch von außen erzeugt werden, d.h. der Magnet muß nicht zwingend auf dem Werkzeug, dem Werkzeugträger und/oder dem Werkzeuggrundhalter befestigt sein. Da in den meisten Fällen die genannten Werkzeugteile ferromagnetisch sind, beeinflussen sie die magnetische Flußdichte eines von außen angelegten Feldes je nach ihrer Lage bzw. Lageänderung.

Nach einer bevorzugten Ausführungsform kann die Magnetfeldüberwachung auch mittels einer Induktionsspule durchgeführt werden. Beim Werkzeugbruch treten nämlich hohe Frequenzen auf, die besonders gut mittels einer Induktionsspule erfaßt werden können.

Während sich zur statischen Induktionsmessung eine Hallsonde anbietet, die bevorzugt in einem Eisenkern eingebettet ist, der von einer Spule umwickelt ist, können dynamische Induktionsmessungen mittels einer Induktionsspule durchgeführt werden. Sowohl die mit einem Steuerstrom gespeiste Hallsonde als auch die genannte Spule sind mit einem Verstärker und einem Spannungsmeß- bzw. Anzeigegerät verbunden. Damit besitzt dieses Meßverfahren bzw. die dazu benutzte Meßanordnung den Vorteil besonderer Preisgünstigkeit bei wesentlich höherer Empfindlichkeit.

Der Abstand der Spule bzw. der Hallsonde wird so gewählt, daß er möglichst klein ist, es aber andererseits auch nicht zu einem Berühren mit den in Rede stehenden Werkzeugmaschinenteilen kommen kann.

Die Erfindung besitzt folgende Vorteile. Die Verformung des Werkzeuges, des Werkzeugträgers und des Werkzeuggrundhalters kann in erster Linie als Maß für den Verschleiß des Werkzeuges, z.B. einer Wendeschneidplatte, genommen werden, da mit zunehmendem Verschleiß die Kraft auf das Werkzeug zunimmt. Die statische Induktionsmessung mittels Hallsonde und die Überwachung der Meßergebnisse dient in erster Linie der Verschleißkontrolle des Werkzeuges.

Ein Werkzeugbruch wird vorteilhafterweise über die Induktionsspule erfaßt. Im Falle eines Werkzeugbruches wird nämlich die gesamte Maschine kurzzeitig vom Schnitt- bzw. Preßdruck entlastet, d.h. die vorher bestehende Verformung ändert sich, wodurch eine Spannung induziert wird. Der Bruchvorgang läuft in wenigen Millisekunden ab, ebenso schnell geht die Feldänderung einher, so daß bereits während des Werkzeugbruches ein sofortiges Abschalten der Werkzeugmaschine erfolgen kann. Im übrigen können mit dem erfindungsgemäßen Verfahren bzw. der erfindungsgemäßen Vorrichtung bereits kleine Kräfte, die eine Formänderung der Werkzeug, Werkzeugträger- bzw. Werkzeuggrundhalteroberfläche bewirken, verwertbare Signale liefern, die weit vor übermäßigem Verschleiß frühzeitig warnen bzw. den eigentlichen Werkzeugbruch als wahrscheinlich bevorstehend ankündigen.

Die bei üblichen Werkstückbearbeitungen, z.B. bei Zerspanoperationen, auftretenden dominierenden Frequenzen liegen im Bereich von weniger als 200 Hz, beim Bruch in der Regel im Frequenzbereich von 500 bis 1000 Hz. Hieraus folgt, daß durch die bei der Bearbeitung des Werkstückes auftretende Bewegung eine weitaus geringere Spannung induziert wird als dies beim Werkzeugbruch der Fall ist. Das erfindungsgemäße Verfahren weist somit ein sehr gutes Signal-Rauschverhältnis auf, das mit den bisher üblichen meßtechnischen Verfahren nicht erreicht werden konnte. Hinzu kommt, daß sowohl die Messung als auch die Weiterverarbeitung der gewonnenen Meßdaten zur Verschleiß- und Bruchüberwachung sich technisch einfach durchführen läßt. Schließlich hat die Erfindung den Vorteil, daß die Überwachungsfühler fast beliebig nah an den zu überwachenden Maschinenteil herangebracht werden können, ohne daß die eigentliche Werkstückbearbeitung oder der Werkzeugwechsel gestört werden. Im einfachsten Fall wird der Meßwertaufnehmer (Spule, Hallsonde) in einem Gehäuse untergebracht, das auf dem Werkzeug, dem Werkzeugträger, dem Werkzeuggrundhalter oder der Revolverscheibe aufgeklebt wird. Auch ermöglicht der Gegenstand der vorliegenden Erfindung eine unmittelbare Meßdatenerfassung.

Ausführungsbeispiele der Erfindung sind in den Zeichnungen dargestellt. Es zeigen

Fig. 1       eine schematische Darstellung des Meßprinzips,

Fig. 2          eine schematische Darstellung eines
                Werkzeuggrundhalters mit Werkzeugträger und Werkzeug in Verbindung
                mit einer Induktionsmeßvorrichtung,

Fig. 3, 4       eine entsprechende Darstellung gemäß

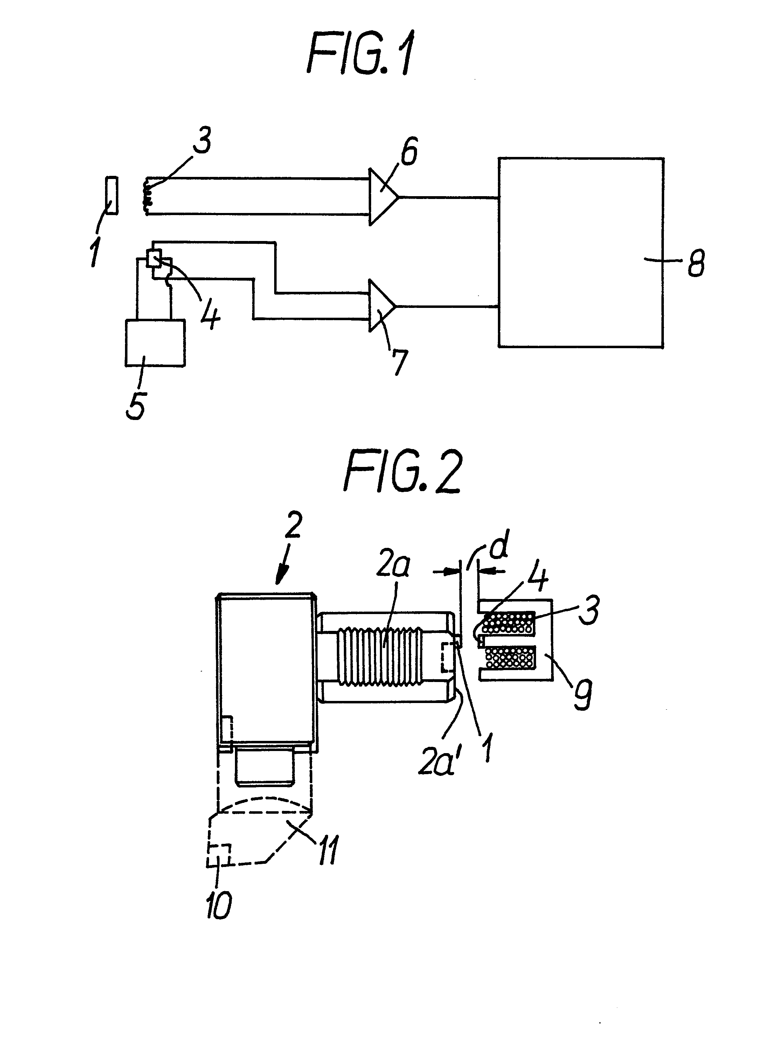

                Fig. 2 mit einer anderen Ausgestaltung der Meßvorrichtung.

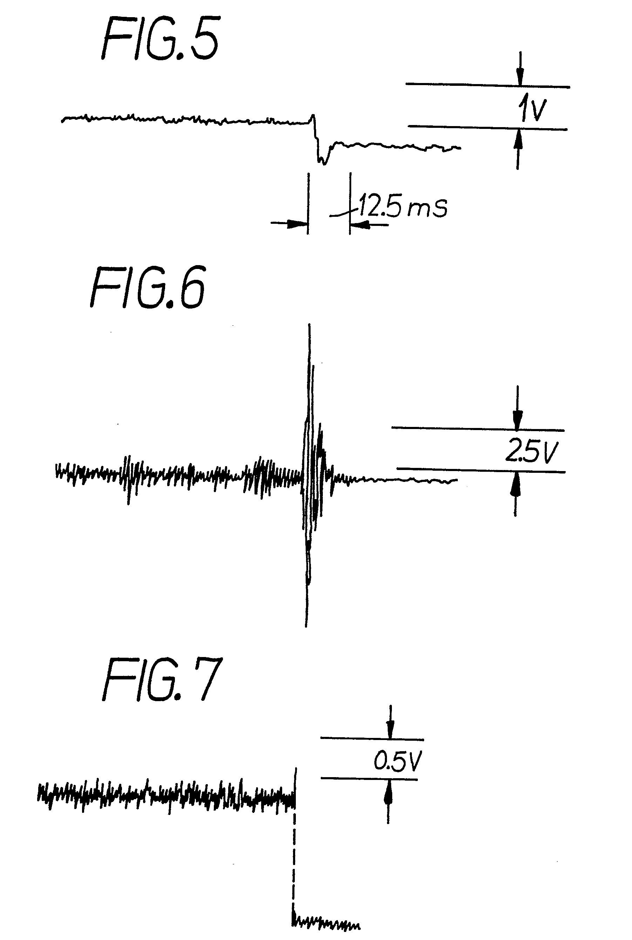

Fig. 5          eine schematische Darstellung der
                Signale eines nach dem Stand der
                Technik zwecks Bruchüberwachung eingesetzten Dehnungsmeßstreifens,

Fig. 6, 7       entsprechende Darstellungen bei Ver-
                wendung der erfindungsgemäßen Vor-
                richtungen.

Zur Durchführung des erfindungsgemäßen Verfahrens benötigt man im Prinzip nur einen oder mehrere Magnete 1, die entweder auf dem Werkzeug, dem Werkzeugträger oder auf dem Werkzeuggrundhalter oder auch außerhalb dieser Teile, d.h. ortsfest, befestigt sind. Zur Vereinfachung der folgenden Erläuterungen sei angenommen, der Magnet 1 befinde sich auf dem Werkzeuggrundhalter 2 gemäß Fig. 2. Dem Magnet 1 stehen eine Induktionsspule 3 sowie eine Hallsonde 4 mit möglichst geringem Abstand gegenüber, wobei die Hallsonde 4 aus einer Energieversorgung 5 mit einem konstanten Steuerstrom versorgt wird. Sowohl die Hallsonde als auch die Induktionsspule sind über entsprechende Leitungen jeweils mit Verstärkern 6 bzw. 7 verbunden, deren Signale in eine Auswerteinheit 8 gegeben werden. Diese Auswerteinheit überwacht den Bearbeitungsprozeß und schaltet die Werkzeugmaschine bei (drohendem) übermäßigem Verschleiß des Werkzeuges oder bei Werkzeugbruch ab.

In Fig. 2 ist dargestellt, wie sowohl Induktionsspule 3 als auch Hallsonde 4 in einem Eisenjoch 9 kompakt und weitgehend zerstörungssicher untergebracht werden können. Das Werkzeug 10 besteht im vorliegenden Fall aus einer Wendeschneidplatte, die auf einem Werkzeugträger 11 geklemmt ist, der wiederum an einem Werkzeuggrundhalter 2 befestigt ist. Der Werkzeuggrundhalter 2 besitzt einen ggf. mit einem Profil ausgestatteten Schaft 2a, der in einer Revolverscheibe geklemmt werden kann. An der Stirnseite 2a' des genannten Schaftes ist ein Magnet 1 (magnetische Induktion: 20 mT (Tesla)) befestigt, demgegenüber eine hier vergrößert dargestellte Meßvorrichtung angeordnet ist. Diese besteht aus einer Induktionsspule 3, die um den mittleren Schenkel eines Eisenjochs 9 gewickelt ist. Am freien Ende des Schenkels dieses Eisenjochs 9 befindet sich eine Hallsonde 4, die über eine Stromzufuhr mit einer nicht dargestellten Energieversorgung verbunden ist. Ebenso sind in dieser Abbildung die Leitungen zu den Verstärkern 6 und 7 sowie zur Auswerteinheit 8 nicht dargestellt. Aufgrund des geringen Abstandes, den Hallsonde 4 und Induktionsspule 3 von dem Magneten einnehmen können, reicht bereits ein schwacher Magnet (< 30 mT), so daß eventuell beim Bearbeitungsprozeß des Werkstückes abfallende Späne nicht am Magnet haften bleiben. Bei der dargestellten Montage liegt der Magnet zudem nicht im direkten Spanbereich, sondern wird durch den Werkzeuggrundhalter sowie die Revolverscheibe weitgehend vor abfallenden Späne geschützt. Als Abstand d zwischen Magnet und Spule bzw. Hallsonde reichen einige zehntel Millimeter, maximal 1 mm. Bevorzugt beträgt der Spalt 2/10 bis 5/10 mm.

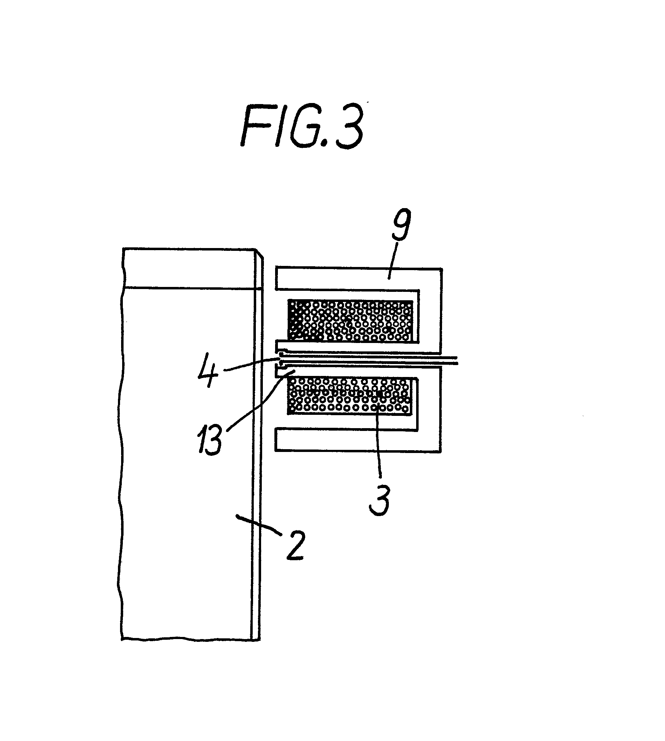

Will man oder kann man aus technischen Gründen an den Grundhalter, dem Werkzeugträger oder dem Werkzeug keinen Magneten befestigen, kann eine Meßanordnung gemäß Fig. 3 verwendet werden. Wie oben beschrieben, sind hier die Induktionsspule 3 sowie die Hallsonde 4 in einem Magneten 13 untergebracht, der als Spulkern dient und der in einem Abstand von wenigen zehntel Millimetern dem Werkzeuggrundhalter 2 gegenübersteht. Das Magnetfeld wird durch den Magneten 13 erzeugt und durch den ferromagnetischen Grundhalter 2 je nach dessen Abstand vom Magneten 13 beeinflußt. Eine Veränderung der Lage des Werkzeuggrundhalters relativ zur Hallsonde 4 sowie die Geschwindigkeit der Ortsveränderungen des Grundhalters 2 werden aufgrund der damit verursachten induzierten Spannungen unmittelbar registriert, verstärkt und ausgewertet. Da bei einer solchen Anordnung der Magnet vor Spänen durch ein umschließendes Gehäuse geschützt werden kann, können auch stärkere Magnete verwendet werden.

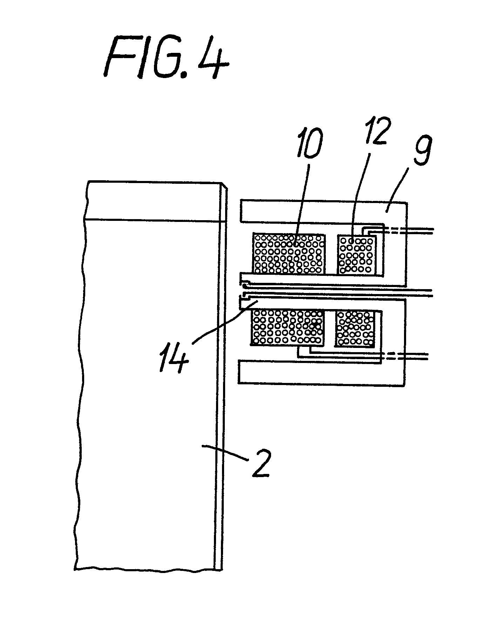

Fig. 4 demonstriert, daß auch Elektromagnete statt Permanentmagneten verwendbar sind. Wie in den vorigen Ausführungsbeispielen beschrieben, wird eine Induktionsspule 10 zur Messung der bei relativen Bewegungen gegenüber dem Grundhalter entstehenden Induktionsspannungen verwendet. Die Induktionsspule 10 ist über den Kern 14 eines Eisenjochs 9 gewickelt. Zur Erzeugung des Magnetfeldes dient jedoch die über denselben Kern gewickelte Spule 12. Diese Ausführung hat den Vorteil, daß kein Magnet benötigt wird, daß die das magnetische Feld erzeugende Spule nur während der Werkzeugüberwachung eingeschaltet wird und dieses Feld geändert werden kann, wodurch die Empfindlichkeit des Sensors optimierbar ist. Die bevorzugt verwendeten Induktionsspulen hatten einen Durchmesser von 10 mm und eine Länge von 5 mm bei einer Windungszahl von 1000 bis 2000. Solche Spulen lassen sich ohne weiteres z.B. am Grundhalter befestigen. In einem Ausführungsbeispiel waren Magnet, Spule und Träger sowie der Vorverstärker auf einer Platine in einer tubusförmigen Aluminiumhülle integriert und als Kopfstück eines ansonsten flexiblen Zuleitungskabels zum Verstärker ausgebildet. Die verwendete Hallsonde benötigte eine Versorgungsspannung von 1 - 2 V und lieferte eine Ausgangsspannung von ca. 200 mV.

0241679

Die von der Hallsonde, der Induktionsspule und von einem bisher nach dem Stand der Technik verwendeten Dehnungsmeßstreifen erhaltenen und jeweils verstärkten Signale sind in Fig. 5 bis 7 abgebildet.

Wie in Fig. 5 dargestellt, hebt sich der Spannungssprung 17, der von einem Dehnungsmeßstreifen, dessen abgegebenen Signale etwa 1000fach verstärkt worden sind, herrührt und der einen Werkzeugbruch signalisiert, auch nach Ausfiltern kaum von Rauschsignalen ab. Der Spannungssprung beträgt nach der Verstärkung etwa 0,6 V.

Demgegenüber zeigt Fig. 6 bei demselben Werkzeugbruch ein Meßsignal, wie es von einer Induktionsspule herrührt (dynamische Messung). Die positiven wie negativen Spannungsspitzenwerte 15 betragen etwa 14 V und sind damit nicht nur um ein Vielfaches größer, sondern heben sich auch deutlich vom Rauschpegel ab. Hierzu kommt, daß die Spitzenwerte im Vergleich zum Spannungssprung nach Fig. 5 praktisch verzögerungslos auftreten und damit ein schnelleres Abschalten der Maschine zum Schutz von Werkzeug und Werkstück gewährleistet wird.

Fig. 7 zeigt den Spannungsverlauf bei Verwendung einer Hallsonde (statische Messung). Auch hier ist der Spannungssprung 16 extrem kurzzeitig und sich deutlich vom Hintergrundrauschen abhebend feststellbar. Er beträgt etwa 3 V.
Die Zeitskala ist in den Fig. 5 bis 7 einheitlich: 12,5 msec entsprechen 1 cm.

0241679

- 12 -

<u>A n s p r ü c h e</u>

1. Verfahren zur berührungslosen Bruch- und Verschleißüberwachung von insbesondere automatisch wechselbaren Werkzeugen, nämlich Wendeschneidplatten in Werkzeugmaschinen, dadurch gekennzeichnet, daß die relative Lageänderung zweier benachbarter Teile der Werkzeugmaschine, von denen mindestens eines durch die beim Zerspanen auftretenden Kräfte beansprucht ist, mittels einer Induktionsmeßspule und/oder einer Hall-Sonde unter Messung der induzierten Spannung überwacht wird und daß bei deren Änderung bzw. bei Überschreitung eines vorgebbaren Grenzwertes ein Signal abgegeben wird.

2. Verfahren nach Anspruch 1, dadurch gekennzeichnet, daß das inhomogene Magnetfeld und/oder die Magnetfeldänderung eines auf dem Werkzeugträger und/oder dem Werkzeuggrundhalter und/oder der Revolverscheibe befestigten Magneten gemessen wird.

3. Verfahren zur berührungslosen Bruch- und Verschleißüberwachung nach Anspruch 1, dadurch gekennzeichnet, daß die durch den Werkzeugträger und/oder den Werkzeuggrundhalter und/oder die Revolverscheibe verursachte Beeinflussung eines von außen angelegten Magnetfeldes gemessen wird.

0241679

4. Verfahren nach Anspruch 2 oder 3, dadurch gekennzeichnet, daß der Magnet ein Permanentmagnet ist.

5. Vorrichtung zur Durchführung des Verfahrens nach Ansprüchen 1 bis 4, dadurch gekennzeichnet, daß auf dem Werkzeugträger (11) und/oder dem Werkzeuggrundhalter (2) und/oder der Revolverscheibe ein Magnet (1) befestigt ist, dem in möglichst geringem Abstand unter Bildung eines Luftspaltes eine Induktionsmeßspule (3) und/oder eine Hall-Sonde gegenübersteht, die jeweils mit einem Verstärker und einem Spannungsmeßgerät verbunden sind.

6. Vorrichtung nach Anspruch 5, dadurch gekennzeichnet, daß die Induktionsspule über einen Eisenkern oder um die Hall-Sonde gewickelt ist bzw. die Hall-Sonde in einen Eisenkern eingebettet ist.

## FIG.1

## FIG.2

# FIG.3

FIG.4

FIG.5

1V

12.5 ms

FIG.6

2.5V

FIG.7

0.5V